# EUROPEAN PATENT APPLICATION

(11) **EP 1 860 578 A1**
(43) Date of publication of application: **28.11.2007**
(21) Application number: 07009989.0
(22) Date of filing: 18.05.2007
(51) Int. Cl.: G06F 17/30

(54) **System for analyzing patents**

(30) Priority: 22.05.2006 US 802118 P
(71) Applicant: CATERPILLAR INC., Peoria Illinois 61629-6490 (US)
(72) Inventor: Cheek, John J., c/o Caterpillar Inc., Peoria, IL 61629-6490 (US); Sampson, Stephen K., c/o Caterpillar Inc., Peoria, IL 61629-6490 (US)
(74) Representative: Wagner, Karl H.

(57) **Abstract**

A method (30) for analyzing patents is disclosed. The method includes compiling a database (32) with data indicative of a plurality of patents and performing factor analysis (36) to establish at least one variable indicative of a characteristic of at least one of the plurality of patents. The method also includes performing cluster analysis (36) to establish a plurality of groups of patents as a function of the at least one established variable. The method also includes performing discrininant analysis (36) to establish at least one formula as a function of the established groups. The method further includes utilizing the formula (36) to predict which one of the plurality of groups a first patent is associated with. The first patent is not included within the plurality of patents.

## Description

### Technical Field

The present disclosure relates to a system for analyzing patents and, more particularly, to a method and apparatus for analyzing patent portfolios.

### Background

Patent analysis typically includes interpreting the needs of a client with respect to focused and general searches of patent documents. Focused patent searches may include a patentability or novelty search, a right to use search, or a validity search. General patent searches may include assignee searches or state of the art searches based on particular product, technology, and/or other segment classifications known in the art. Often, a patent portfolio, i.e., a grouping of patents each having a commonality with the rest, is established in response to a client need or desire. The client need is usually specific and the millions of issued patents must be evaluated to determine whether or not a particular patent is within defined contours of the patent portfolio. Many filtering techniques are typically used to identify one or more particular patents that should be included within the patent portfolio. For example, a patent classification system is typically utilized to eliminate many patents that are unrelated to the client need and thus outside of the portfolio contours. Additionally, manual review is typically utilized to review those patents not eliminated based on the classification system. Manual review of patents may be time consuming, usually requires a significant amount of expertise and/or experience, and may often be imprecise.

U.S. Patent Application No. 2004/0181427 ("the '427 application") filed by Stobbs et al. discloses a computer-implemented patent portfolio analysis method and apparatus. The method of the '427 application utilizes a linguistic analysis engine to determine the meaning or semantics of an analyzed patent claim to determine claim elements. The method of the '427 application also includes a cluster generation step that clusters or groups patents together that have common features, for example, patents belonging to a certain patent class/subclass. The method of the '427 application may, alternatively, utilize an eigenvector analysis procedure to group patents together that fall within near proximity to one another in the eigenspace. The eigenvector analysis procedure of the '427 application utilizes a corpus of training claims that contain representative examples of the entire claim population with which the patent portfolio analyzer is intended to operate. The method of the '427 application also includes projecting uncategorized claims in the eigenspace to associate them with the closest training claim within the eigenspace.

The method of the '427 application utilizes training claims that may need to be manually identified and/or drafted so as to be representative of the entire claim population. This may require significant expertise or experience and may be time consuming and/or imprecise. Additionally, the method of the '427 application may utilize a linguistic analysis engine that identifies patents having similar or synonymous words and may not extract information or meaning from the text of the patents to identify solutions or problems described within the patents. Also, the method of the '427 application may not perform factor analysis to identify variables indicative of characteristics among a plurality of patents and, may instead, require a user to manually identify categories for use within the cluster generation step. Furthermore, the method of the '427 application may not perform statistical analysis to check the reliability or statistically verify the results of the eigenspace.

The present disclosure is directed to overcoming one or more of the shortcomings set forth above.

### Summary of the Invention

In one aspect, the present disclosure is directed to a method for analyzing patents. The method includes compiling a database with data indicative of a plurality of patents and performing factor analysis to establish at least one variable indicative of a characteristic of at least one of the plurality of patents. The method also includes performing cluster analysis to establish a plurality of groups of patents as a function of the at least one established variable. The method also includes performing discrininant analysis to establish at least one formula as a function of the established groups. The method further includes utilizing the formula to predict which one of the plurality of groups a first patent is associated with. The first patent not being included within the plurality of patents.

In another aspect, the present disclosure is directed to a method for analyzing patents. The method includes compiling a database with first data indicative of information associated with at least one patent and performing factor analysis with respect to the first data.

In yet another aspect, the present disclosure is directed to a work environment for analyzing patents. The work environment includes a computer, at least one database populated with data indicative of a plurality of patents, and a program. The program is configured to perform a semantic process to extract information from each of the plurality of patents. The extracted information is indicative of at least one of a disclosed problem to be solved or a claimed solution. The program is also configured to perform factor analysis with respect to the extracted information to identify a plurality of variables and perform cluster analysis with respect to the plurality of variables to arrange the plurality of patents within a plurality of groups. The program is also configured to perform discriminant analysis with respect to the plurality of groups to identify a subset of the plurality of variables and identify a formula configured to functionally relate the subset. The program is also configured to evaluate statistical significance with respect to at least one of the performance of factor, cluster, or discriminant analysis. The program is further configured to perform a semantic process to extract information from a first patent and utilize the identified formula with respect to the information extracted from the first patent to predict which one of the plurality of groups the first patent is associated with. The first patent not being previously arranged within one of the plurality of groups.

### Brief Description of the Drawings

Fig. 1 is a flow chart of an exemplary method for analyzing patents in accordance with the present disclosure;
Fig. 2 is flow chart of another exemplary method for analyzing patents in accordance with the present disclosure; and
Fig. 3 is a schematic illustration of an exemplary work environment for performing the methods of Figs. 1 and 2.

### Detailed Description

The term patent as used herein includes any document submitted to any national and/or international patent office and/or government as an application for patent to be issued or granted therefrom, any document issued or granted as a patent by any national and/or international patent office and/or government, whether published or unpublished, and/or any document created by any commercial or non-commercial entity indicative of a document submitted as an application for patent and/or a patent itself.

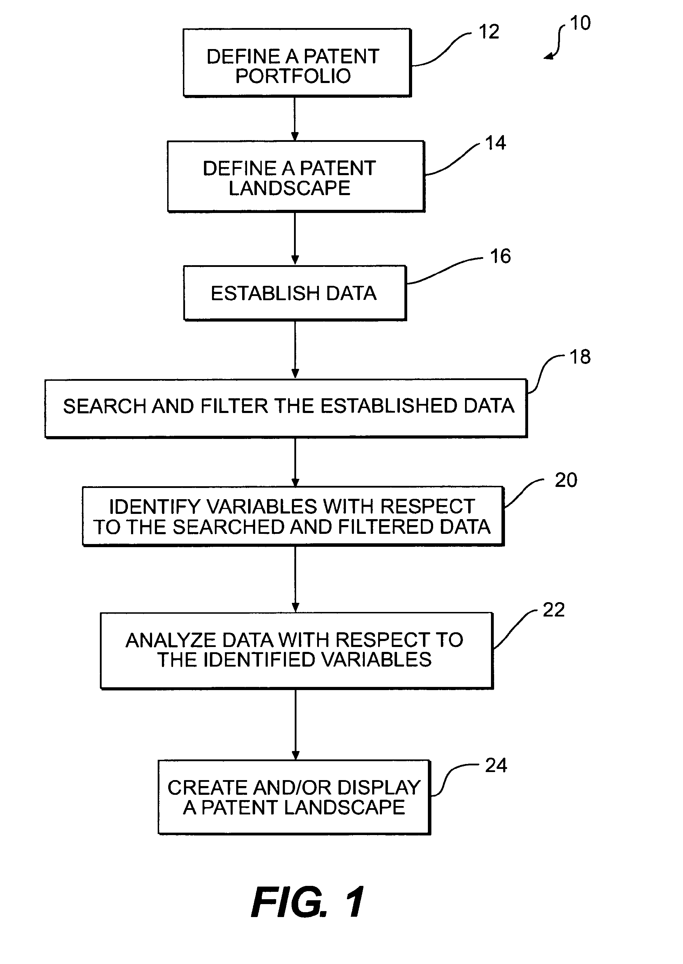

Fig. 1 illustrates an exemplary method 10 for analyzing patents. Method 10 may include defining a patent portfolio, step 12, and defining a patent landscape, step 14. Method 10 may also include establishing data, step 16. Method 10 may also include searching and filtering the established data, step 18. Method 10 may also include identifying variables with respect to the searched and filtered data, step 20. Method 10 may also include analyzing the established data with respect to the identified variables, step 22. Method 10 may further include creating and/or displaying a patent landscape, step 24. It is contemplated that method 10 may be performed continuously, periodically, singularly, as a batch method, and/or may be repeated as desired. It is also contemplated that one or more of the steps associated with method 10 may be selectively omitted, that the steps associated with method 10 may be performed in any order, and that the steps associated with method 10 are described herein in a particular sequence for exemplary purposes only.

Step 12 may include defining a patent portfolio. A patent portfolio may include a grouping of patents related to one another as a function of one or more characteristics. For example, a patent portfolio may include a group of patents based on a business or industry focus of an entity, a product category, an industry itself, a technology, and/or any other characteristic known in the art. Specifically, step 12 may include defining one or more criteria and/or contours of a particular patent portfolio as a function of a business need or desire, such as, for example, identifying competitors within an industry or technology in which a client operates, identifying patent trends, e.g., increasing quantities generally or with respect to particular competitors or groups of competitors, within technology sectors, identifying particular product categories and the related patented products therein, and/or as a function of any other business motivation known in the art.

Step 14 may include defining a patent landscape. A patent landscape may include a graphical representation of related patents as a function of predetermined variables. For example, a patent landscape may include a document textually, pictorially, and/or numerically representing one or more variables functionally related to a defined patent portfolio. Specifically, step 14 may include defining a type of graphical representation, e.g., a bar or pie chart, and one or more variables, e.g., problem solved, disclosed solution, assignee, classification, and/or any other patent characteristic known in the art, as a function of a defined patent portfolio, e.g., as established within step 12. It is contemplated that the variables may be determined as a function of any criteria known in the art, such as, for example, experience, business needs or goals, competitive assessment, and/or patent strategy, e.g., strategic and/or tactical planning.

Step 16 may include establishing data. Specifically, step 16 may include creating a database of one or more patents identified and/or anticipated to be relevant to the patent landscape as defined within step 14. Step 16 may also include reviewing industry nomenclature and selecting a source of data, e.g., a source of patents and/or characteristics of patents.

Reviewing industry nomenclature may include reviewing hardcopy and/or electronic sources of information related to an industry and identifying common terminology, industry specific features, terms of art, and/or any other type of information known in the art. For example, one or more reference materials, e.g., dictionaries or trade manuals, and/or instructional materials, e.g., Internet websites or periodicals, may be accessed. It is contemplated that reviewing industry nomenclature may be advantageous to identify industry and/or patent practice terminology utilized to describe or represent product features and establish a common basis on which to evaluate the relevance of one or more patents with respect to a defined patent portfolio.

Selecting a source of data may include identifying a generic collection of substantially all or a significant amount of patents and one or more characteristics of the patents. For example, generic collections of patents include commercially available patent databases from sources, such as, for example, Derwent®, Delphion®, and the U.S. Patent and Trademark Office. Additionally, identifying characteristics of the patents may include bibliography data, e.g., classification or assignee, and/or textual components of a patent, e.g., title, abstract, or claim.

Step 16 might additionally include establishing data as a function of a semantic processing tool configured to automatically identify one or more phrases within individual patents. Generally, a semantic processing tool may embody a program configured to extract knowledge, e.g., relevance or meaning, from text. Specifically, step 16 may include performing one or more algorithms configured to scan complete or partial text of one or more patents to extract knowledge or information therefrom. Step 16 may include performing one or more algorithms configured as semantic programs to identify and extract one or more problems, solutions, and/or any other information disclosed within a patent with respect to one or more industries and/or technologies. For example, step 16 may include performing a semantic process to identify at least one disclosed problem that a disclosed solution attempts to solve and/or overcome as described or explained by any section or portion of a patent, e.g., a background section, a brief description section, a summary section, a detailed description section, an industrial applicability section, a claim section, an abstract section, a title section, a brief description of drawings section, and/or any other section of a patent. Furthermore, step 16 may include establishing data indicative of the problems and/or solutions identified with a semantic processing tool. It is contemplated that a semantic processing tool may be configured to extract knowledge from text in any language. It is also contemplated that the established data may be indicative of one or more patents as represented by characterizations thereof, e.g., a disclosed problem with respect to performing a semantic process or bibliographic data.

Step 18 may include searching and filtering data. Specifically, step 18 may include performing a search query with respect to the data established within step 16 to establish a first subset of data with respect to the data established within step 16 and evaluating the first subset with respect to the defined patent landscape established within step 14 to establish a second subset of data. For example, step 18 may include searching the data to identify patents disclosing the same or a similar problem to be solved and/or disclosing the same or a similar solution to establish the first subset of data. For another example, step 18 may include searching the data to identify patents that include particular or predetermined keywords. Subsequently, step 18 may filter the data as a function of classification or other predetermined patent taxonomy or hierarchy to eliminate non-relevant patents that may satisfy the search query but may not correlate with the defined patent landscape. For example, step 18 may include identifying patents within the first subset of data that include particular classifications to establish the second subset of data. Accordingly, step 18 may, by searching and filtering data, establish a group of data configured to be further analyzed. It is contemplated that the first subset of data may include a lower quantity of data than the data established within step 16 and that the second subset of data may include a lower quantity of data than the first subset of data. It is also contemplated that step 18 may be selectively omitted either completely or partially as a function of the quantity of data established within step 16 when, for example, the quantity of data established within step 16 may be below a given quantity.

Step 18 might additionally include evaluating the second subset of data as a function of a semantic processing tool configured to automatically identify one or more phrases within individual patents. As such, step 16 might not include establishing data as a function of a semantic processing tool, and step 18 may reduce the quantity of data within one or more generic collections of patents by searching and filtering such data before evaluating the data as a function of a semantic processing tool. That is, step 16 may establish data indicative of one or more patents within a database identified and/or anticipated to be relevant to the patent landscape, step 18 may search and filter the established data to establish a second subset of data indicative of one or more patents, and step 18 may also evaluate the second subset of data as function of a semantic processing tool to identify and extract information from the one or more patents within the second subset of data to establish a group of data configured to be further analyzed.

Step 20 may include identifying variables with respect to the established data. Specifically, step 20 may include identifying one or more variables indicative of one or more parameters of a defined patent landscape, e.g., the patent landscape defined within step 14. A variable may be indicative of any desired, selected, and/or identified characteristic of a patent landscape, such as, for example, a particular problem to be solved, a particular type of solution, subject or predicate phrases within patent claims, abstracts, detailed descriptions, and/or any other patent section, keywords within patent claims, abstracts, detailed descriptions, and/or any other patent section, classifications, cited references, assignee, any type of bibliographic information, and/or any other characteristic or combination of characteristics known in the art. It is contemplated that the one or more variables identified within step 20 may or may not be selected as a function of the type of patent landscape that may be desired to be established.

Step 22 may also include analyzing data with respect to the identified variables. Specifically, step 22 may include performing a factor analysis with respect to the identified variables established within step 20. Generally, factor analysis includes a multivariate statistical technique which assesses the degree of variation between variables based on correlation coefficients to measure the relative association between two or more variables. Factor analysis may analyze the interrelationship between variables that are otherwise unobservable, conventionally referred to as latent relationships, to identify underlying patterns or groups within data and with respect to the variables. Factor analysis may include at least two analysis models, for example, principle component analysis and common factor analysis, each of which may identify one or more factors, i.e., the underlying patterns or groups. A first factor may represent a combination of variables that accounts for more data variance than any other linear combination of variables. A second factor may represent a combination of variables that accounts for more residual data variance, e.g., the variance remaining after the first factor is established, than any other linear combination of remaining variables, e.g., those variables not combined with respect to the first factor. Subsequent factors may each represent a combination of remaining variables that account for more residual variance than any other linear combination of remaining variables. The one or more factors identified within factor analysis may represent logical patterns and may be labeled accordingly. It is contemplated that variables may be grouped within more than one factor. Factor analysis, in general, is conventionally known in the data analysis arts and, for clarification purposes, is not further explained.

Accordingly, step 22 may establish one or more groups as a function of the identified factors. Each group may be representative of one or more variables identified within step 20 and each group may include a plurality of data operatively associated with the one or more identified variables. As such, the identified variables may be associated with one another, and the data established within step 18 may be analyzed and correspondingly associated within the groups as a function of the associated variables. It is contemplated that step 22 may not associate all of the variables identified within step 20 into a particular group because the variables identified within step 20 may be insufficient, e.g., variables may have been identified such that a portion thereof may not, via a factor analysis, functionally relate with other variables. It is also contemplated that step 20 may be repeated to establish entirely new variables and/or may be repeated to establish secondary variables. As such, step 22 may also be repeated, as desired, to establish new or additional groups to further interrelate variables identified within step 20. Furthermore, the new or additional groups may be manually combined or further interrelated to combine one or more groups logically linked with one another and/or to reduce the quantity of groups.

Step 24 may include creating and/or displaying a patent landscape. Specifically, step 24 may include associating the data established within step 18 with the variables and groups established within step 22. For example, each of the variables identified within step 20 may be linked to data, e.g., a patent, established within step 18. As such, the established data may be associated into the groups established within step 22. It is contemplated that step 22 may not interrelate all of the data established within step 18 and that some data may require manual grouping, e.g., manually reading patent text and associating a non-interrelated patent within a group established via factor analysis within step 22 or interrelating data within one or more new groups. As such, step 24 may, by associating the data, e.g., patents, established within step 18, arrange the data within the one or more groups that may define a patent landscape. Additionally, step 24 may include displaying, e.g., graphically representing, the data according to the established groups. For example, step 24 may include graphically representing the quantity of patents and identifying the particular patents within one or more groups and displaying the type of group by variable and/or other label, thus, creating a patent landscape.

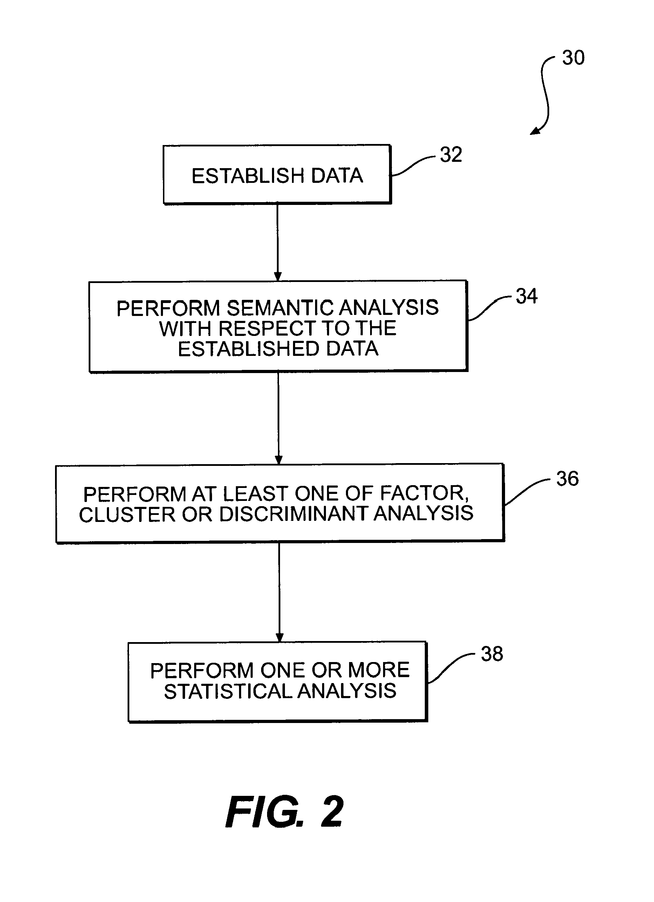

Fig. 2 illustrates another exemplary method 30 for analyzing patents. Method 30 may include establishing data, step 32, and performing semantic analysis with respect to the established data, step 34. Method 30 may also include performing at least one of factor, cluster, or discriminant analysis, step 36. Method 30 may further include performing one or more statistical analyses, step 38. It is contemplated that method 30 may be performed continuously, periodically, singularly, as a batch method, and/or may be repeated as desired. It is also contemplated that one or more of the steps associated with method 30 may be selectively omitted, that the steps associated with method 30 may be performed in any order, and that the steps associated with method 30 are described herein in a particular sequence for exemplary purposes only.

Step 32 may include establishing data indicative of one or more patents. Specifically, step 32 may include accessing, searching, and filtering data indicative of one or more patents to establish a first quantity of data to be further analyzed. For example, step 32 may include accessing one or more generic collections of patents, e.g., commercially available patent databases from sources, such as, for example, Derwent®, Delphion®, and the U.S. Patent and Trademark Office. Additionally, step 32 may include performing a search query with respect to the accessed data to establish a first subset of data, e.g., searching the accessed data to identify patents disclosing the same or a similar problem to be solved and/or disclosing the same or a similar solution, searching the data to identify data having particular or predetermined keywords, and/or any other search methodology known in the art. Additionally, step 32 may include filtering the searched data as a function of classification or other predetermined taxonomy or hierarchy to eliminate non-relevant data that may satisfy the search query but may not correlate with one or more predetermined criteria, e.g., eliminate data that may be outside the contours of a predetermined patent analysis. As such, step 32 may establish a group of patents configured to be further analyzed. It is contemplated that step 32 may include any search technique or methodology known in the art to establish a group of patents.

Step 34 may include performing semantic processing with respect to the established group of data. As described above with respect to method 10, a semantic processing tool may embody a program configured to extract knowledge, e.g., relevance or meaning, from text. Specifically, step 34 may include performing one or more algorithms configured to scan complete or partial text of one or more patents to extract knowledge or information therefrom. Step 34 may include performing one or more algorithms configured as semantic programs to identify and extract one or more problems, solutions, and/or any other information disclosed within a patent with respect to one or more industries and/or technologies.

Step 36 may include performing at least one of factor, cluster, or discriminant analysis. As described above with respect to method 10, factor analysis includes a multivariate statistical technique which assesses the degree of variation between variables based on correlation coefficients to measure the relative association between two or more variables. Factor analysis may analyze the interrelationship between variables that are otherwise unobservable, conventionally referred to as latent relationships, to identify underlying patterns or groups within data and with respect to the variables. Cluster analysis generally includes a multivariate technique which attempts to group objects with high homogeneity within a particular cluster and attempts to distinguish objects with high heterogeneity between different clusters. Cluster analysis may also include identifying one or more variables and grouping a particular object, e.g., a patent, within a cluster as a function of the identified variables. Discriminant analysis generally includes performing linear regression to obtain an index function with respect to dependent and independent variables established within a cluster analysis. Independent variables are variables considered to most closely relate the one or more clusters. Each of factor, cluster, and discriminant analysis is conventionally known in the data analysis arts and, for clarification purposes, are not further explained. It is contemplated, however, that step 36 may include performing any factor, cluster, and/or discriminant analysis technique or methodology known in the art.

Step 38 may include performing one or more statistical analyses. Specifically, step 38 may include measuring reliability of factor analysis, e.g., measuring the internal consistency of variable groups established within factor analysis and/or testing of the statistical significance of an index function established within discriminant analysis. Additionally, step 38 may include manually evaluating the logic of the grouping of variables within factor analysis and of the grouping of objects within cluster analysis. For example, step 38 may include measuring reliability of factor analysis by calculating Cronbach's Alpha and may include testing the statistical significance of an index function of discriminant analysis by calculating Wilks' Lambda each of which is known in the art.

Accordingly, method 30 may include establishing a database populated with a plurality of patents desired to be interrelated, performing semantic processing to extract knowledge from each of the plurality of patents, performing factor analysis to establish an interrelationship between one or more variables as a function of the extracted knowledge, and performing cluster analysis to group the plurality of patents into distinct groups. Method 30 may also include performing discriminant analysis to establish an indexing function with respect to the variables identified within the factor and the groups established within the cluster analysis and the formula may be configured to predict which group an additional patent, e.g., a patent not within the database populated with the plurality of patents, may be logically associated. For example, an additional patent may be semantically processed to extract knowledge therefrom, to identify one or more variables corresponding to the variables of the indexing function, and predict the group with which the additional patent has the highest homogeneity. As such, method 30 may be configured to establish one or more groups of patents having substantial homogeneity therebetween as a function of semantic knowledge and may also be configured to determine a formula as a function of one or more variables based on semantic knowledge, which may be utilized to predict which one of the groups a new patent may associated, e.g., utilized to identify which group of patents the new patent has substantial homogeneity.

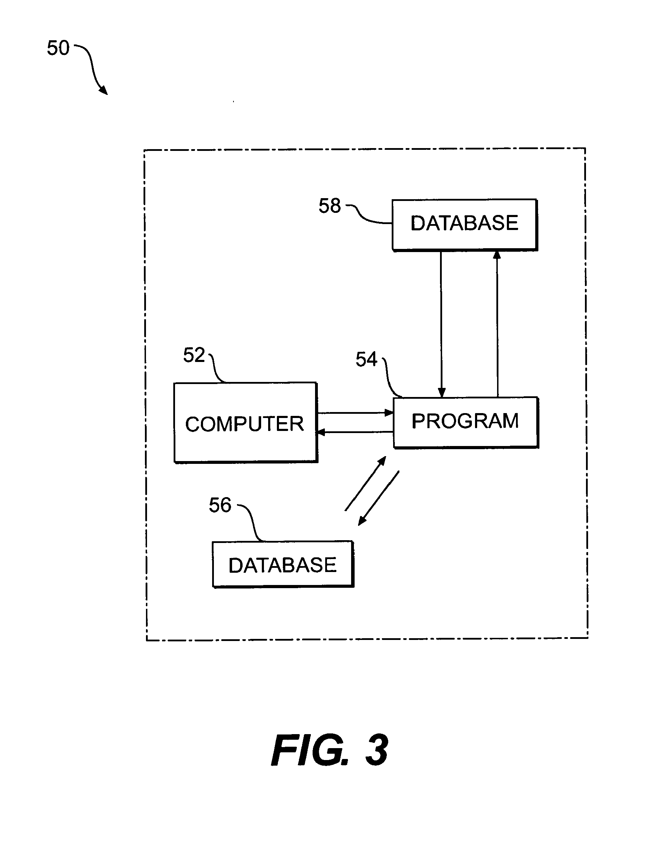

Fig. 3 illustrates an exemplary work environment 50 for performing methods 10 and/or 30. Work environment 50 may include a computer 52, a program 54, and first and second databases 56, 58. Work environment 50 may be configured to accept inputs from a user via computer 52 to analyze patents. Work environment 50 may be further configured to communicate and/or display data or graphics to a user via computer 52. It is contemplated that work environment 50 may include additional components such as, for example, a communications interface (not shown), a memory (not shown), and/or other components known in the art.

Computer 52 may include a general purpose computer configured to operate executable computer code. Computer 52 may include one or more input devices, e.g., a keyboard (not shown) or a mouse (not shown), to introduce inputs from a user into work environment 50 and may include one or more output devices, e.g., a monitor, to deliver outputs from work environment 50 to a user. Specifically, a user may deliver one or more inputs, e.g., data, into work environment 50 via computer 52 to supply data to and/or execute program 54. Computer 52 may also include one or more data manipulation devices, e.g., data storage or software programs (not shown), to transfer and/or alter user inputs. Computer 52 may also include one or more communication devices, e.g., a modem (not shown) or a network link (not shown), to communicate inputs and/or outputs with program 54. It is contemplated that computer 52 may further include additional and/or different components, such as, for example, a memory (not shown), a communications hub (not shown), a data storage (not shown), a printer (not shown), an audio-video device (not shown), removable data storage devices (not shown), and/or other components known in the art. It is also contemplated that computer 52 may communicate with program 54 via, for example, a local area network ("LAN"), a hardwired connection, and/or the Internet. It is further contemplated that work environment 50 may include any number of computers and that each computer associated with work environment 50 may be accessible by any number of users for inputting data into work environment 50, communicating data with program 54, and/or receiving outputs from work environment 50.

Program 54 may include a computer executable code routine configured to perform one or more sub-routines and/or algorithms to analyze patents within work environment 50. Specifically, program 54, in conjunction with a user, may be configured to perform one or more steps of method 10 and/or method 30. Program 54 may receive inputs, e.g., data, from computer 52 and perform one or more algorithms to manipulate the received data. Program 54 may also deliver one or more outputs, e.g., algorithmic results, and/or communicate, e.g., via an electronic communication, the outputs to a user via computer 52. Program 54 may also access first and second databases 56, 58 to locate and manipulate data stored therein to arrange and/or display stored data to a user via computer 52, e.g., via an interactive object oriented computer screen display and/or a graphical user interface. It is contemplated that program 54 may be stored within the memory (not shown) of computer 52 and/or stored on a remote server (not shown) accessible by computer 52. It is also contemplated that program 54 may include additional sub-routines and/or algorithms to perform various other operations with respect to mathematically representing data, generating or importing additional data into program 54, and/or performing other computer executable operations. It is further contemplated that program 54 may include any type of computer executable code, e.g., C++, and/or may be configured to operate on any type of computer software.

First and second databases 56, 58 may be configured to store and arrange data and to interact with program 54. Specifically, first and second databases 56, 58 may be configured to store a plurality of data, e.g., data indicative of one or more patents. First and second databases 56, 58 may store and arrange any quantity of data arranged in any suitable or desired format. Program 54 may be configured to access first and second databases 56, 58 to identify particular data therein and display such data to a user. It is contemplated that first and second databases 56, 58 may include any suitable type of database such as, for example, a spreadsheet, a two dimensional table, or a three dimensional table, and may arrange and/or store data in any manner known in the art, such as, for example, within a hierarchy or taxonomy, in groupings according to associated documents, and/or searchable according to associated identity tags. It is contemplated that first database may be configured to store data to be manipulated within method 10 and that second database 58 may be configured to store data to be manipulated within method 30. It is also contemplated that the data stored within second database 58 may alternatively be stored within first database 56 and that second database 58 may be selectively omitted.

### Industrial Applicability

The disclosed system may be applicable for analyzing patents. Specifically, method 10 may be utilized to establish a patent landscape. For example, a patent landscape may be defined (step 14), a plurality of patents may be established (steps 16, 18), one or more variables may be identified (step 20), the variables may be arranged within one or more groups (step 22), and the plurality of patents may be arranged within the groups to establish a patent landscape (step 24). An exemplary operation of method 10 is provided within the slides included in the Appendix. Because method 10 may identify one more variables, latent patterns within the plurality of patents may be identified.

Additionally, method 30 may be utilized to establish one or more groups of patents and establish a formula that may identify which patent group a given patent may logically be associated with. For example, a plurality of patents (step 32) may be divided into a plurality of groups via factor analysis and cluster analysis (step 36) as a function of one or more characteristics, e.g., variables, established via semantic processing (step 34). A formula may be determined via discriminant analysis (step 36) that may be utilized to predict which group an otherwise non-grouped patent, e.g., a newly issued patent or a newly discovered patent, may be associated. Because method 30 may not require manual reading of each of the plurality of patents to establish the groups and may not require manual reading of each additional patent desired to be grouped, the effort necessary for patent analysis may be greatly reduced. For example, time necessary to manually read and understand a patent may be reduced because of the semantic processing, and expertise necessary to manually evaluate a patent and associate one or more patents within groups may be reduced because of the index function.

It will be apparent to those skilled in the art that various modifications and variations can be made to the disclosed system for analyzing patents. Other embodiments will be apparent to those skilled in the art from consideration of the specification and practice of the disclosed method and apparatus. It is intended that the specification and examples be considered as exemplary only, with a true scope being indicated by the following claims and their equivalents.

## Claims

1. A method (30) of analyzing patents comprising:
compiling a database (32) with data indicative of a plurality of patents;
performing factor analysis (36) to establish at least one variable indicative of a characteristic of at least one of the plurality of patents;
performing cluster analysis (36) to establish a plurality of groups of patents as a function of the at least one established variable;
performing discrininant analysis (36) to establish at least one formula as a function of the established groups; and
utilizing the formula (36) to predict which one of the plurality of groups a first patent is associated with, the first patent not being included within the plurality of patents.

2. The method of claim 1, further including performing a semantic process (34) to extract information from the plurality of patents, wherein performing the factor analysis includes identifying at least one variable as a function of the extracted information.

3. The method of claim 1, wherein:
the semantic process is configured to extract information from each of the plurality of patents; and
the extracted information extracted from each of the plurality of patents is indicative of a solution disclosed in a respective one of the plurality of patents.

4. The method of claim 1, wherein:
the semantic process is configured to extract information from each of the plurality of patents; and
the extracted information extracted from each of the plurality of patents is indicative of a problem disclosed in a respective one of the plurality of patents.

5. The method of claim 1, further including performing at least one statistical analysis (38) with respect to the at least one variable, the plurality of groups, or the at least one formula.

6. The method of claim 1, further including calculating Cronbach's Alpha to measure the reliability of the at least one variable established by performing factor analysis.

7. The method of claim 1, further including calculating Wilks' Lambda to measure the statistical significance of the at least one formula established by performing discriminant analysis.

8. A method (30) for analyzing patents comprising:
compiling a database (34) with first data indicative of information associated with at least one patent; and
performing factor analysis (36) with respect to the first data.

9. The method of claim 8, wherein compiling the database with first data includes:
extracting knowledge (34) from text associated with the at least one patent as a function of performing a semantic process; and
populating the database with first data indicative of the extracted knowledge.

10. A work environment (50) for analyzing patents comprising:
a computer (52);
at least one database (56, 58) populated with data indicative of a plurality of patents; and
a program (54) configured to perform the method according to any one of claims 1-9.
